# EUROPEAN PATENT SPECIFICATION

(11) **EP 0 435 927 B1**
(45) Date of publication and mention of the grant of the patent: **05.06.1996**
(21) Application number: 89910891.4
(22) Date of filing: 19.09.1989
(51) Int. Cl.: B42D 15/00, B43L 1/00

(54) **MESSAGE COVER**
NACHRICHTENHÜLLE
COUVERTURE DE MESSAGES

(30) Priority: 20.09.1988 GB 8822042
(43) Date of publication of application: 10.07.1991
(73) Proprietor: SPACE CREATION LIMITED, West Yorkshire BD20 5EP (GB)
(72) Inventor: ELLIOTT, Lawrence, Norman, Bradford BD9 6BB (GB); POWELL, Michael, Philipp, Bradford BD15 7RJ (GB)
(74) Representative: Wharton, Peter Robert
(86) International application number: GB8901093
(87) International publication number: WO9003277

(56) References cited:
- GB-A- 1 595 948
- US-A- 3 353 281
- US-A- 3 499 377
- US-A- 4 722 145
- PATENT ABSTRACTS OF JAPAN vol. 6, no. 9 (E-90)(887) 20 January 1982, & JP-A-56 131254 (JIYUUJIYOU ENGINEERING KK) 14 October 1981
- PATENT ABSTRACTS OF JAPAN vol. 6, no. 119 (E-116)(997) 03 July 1982, JP-A-5748866 (CANON K.K.) 20 March 1982
- PATENT ABSTRACTS OF JAPAN vol. 7, no. 111 (E-175)(1256) 14 May 1983, JP-A-5833352 (MATSUSHITA DENSOU KIKI K.K.) 26 February 1983

## Description

This invention relates to a cover for sending messages in particular for sending telecopier or facsimile messages (hereinafter referred to as "fax" messages).

Recently there has been a great increase in the provision and use of facsimile or telecopier machines. Most businesses now have a fax machine and many have several. This enables messages, letters, orders, sketches, drawings, and the like to be sent effectively instantaneously via the telephone system. Many businesses sending a facsimile transmission use one of the company letterheads on which to write the message. After transmission the letterhead bearing the message may then be used as a file copy. However, for many purposes file copies are not required and the amount of expensive company stationery used in this manner can be quite large.

The invention seeks to provide a re-usable message cover which overcomes the above disadvantage.

According to the present invention there is provided a message cover capable of displaying a permanent message and an eraseable message which comprises a front sheet which is transparent to messages and an under sheet which receives an erasable message, the front sheet providing a protective cover which prevents the eraseable message being affected by passage through a facsimile machine.

In one convenient form, the cover of the invention can comprise three sheets: a back sheet and a transparent front and middle sheet. The back sheet may be transparent or opaque and can be printed with the required indicia, such as the business name, address and so on. Alternatively the back sheet can merely serve as a base for receiving a company letterhead which will be sandwiched between the back sheet and the transparent middle sheet, the middle sheet then serves as the surface on which the eraseable message may be written using commercially available eraseable pens. The front sheet provides the protective cover which prevents the eraseable message being effected by passage through the facsimile machine. However, if desired, the back sheet can be dispensed with and the permanent message (eg the company details) printed directly onto the sheet below the front sheet, or indeed the front sheet itself.

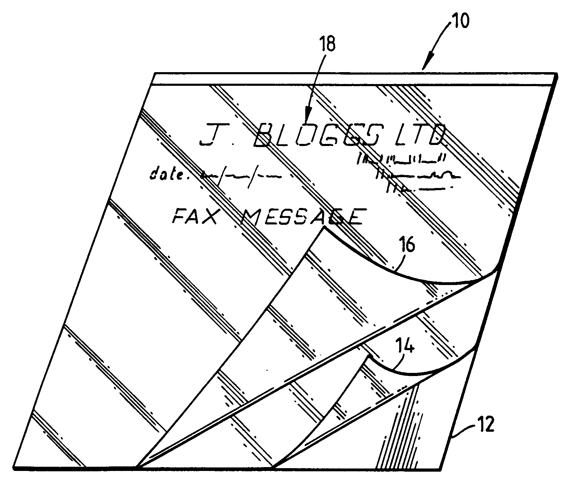

The invention will be described further, by way of example, with reference to the accompanying drawing, in which the sole figure is a diagrammatic perspective view of an embodiment of a message cover in accordance with the invention.
Referring to the drawing, a message cover generally designated (10) comprises, in this case, three sheets: an opaque back sheet (12), a transparent intermediate sheet (14) and a transparent front sheet (16). Sandwiched between the sheets (12) and (14) is a letter head of the business such that the permanent indicia generally designated at (18) show through to the front of the cover (10). The sheet (16) is peeled back and the message which is desired to be sent written below the heading using an eraseable pen. The sheet (16) is moved so as to cover the sheet (14) thereby protecting the message and the whole cover (10) may be run through a fax machine. The message and permanent indicia (18) will transmit and to the recipient will appear as if a message had merely been written on the sender's letterhead.

Peeling back the front sheet (16) allows the eraseable message to be erased using a soft cloth and the cover nay be used again. The letterhead need not be removed and one letterhead will therefore suffice for many messages. Typically the cover of the invention may be used for forty or fifty times a day for several months before the transparent sheets (14) and (16) become too scored for further usage.

In an alternative embodiment, the sheet (12) is dispensed with and the sheet (14) is printed directly with the indicia (18). It is preferred in this event that the sheet (14) not be transparent but be opaque so that a plain background is presented to the message as it travels through the facsimile machine.

The size of the cover of the invention is a matter of choice: international paper size A4 is a convenient size, but an other size may be chosen as appropriate, e.g. A3, A5, B4, B5, foolscap, quarto, etc. Furthermore, colour may be used either to render the product attractive or enhance transmission quality. The sheets may be fixed together at any side, or may even be supplied loose to be fitted together by the user.

The invention provides simple, inexpensive way of sending fax messages with a re-usable message cover.

## Claims

1. A message cover capable of displaying a permanent message and an eraseable message which comprises a front sheet which is transparent to messages and an under sheet which receives an eraseable message, the front sheet providing a protective cover which prevents the eraseable message being affected by passage through a facsimile machine.

2. A cover as claimed in claim 1 which comprises three sheets: a back sheet and a transparent front and middle sheet.

3. A cover as claimed in claim 2 in which the back sheet is transparent or opaque and is printed with the required indicia.

4. A cover as claimed in claim 3 in which the back sheet is opaque.

5. A cover as claimed in either of claims 1 or 2 in which the back sheet serves as a base for receiving a company letterhead which will be sandwiched between the back sheet and the transparent middle sheet, the middle sheet then serves as the surface on which the eraseable message may be written using commercially available eraseable pens.

6. A cover as claimed in claim 1 which comprises two sheets, the underneath sheet capable of receiving the eraseable message and the permanent message printed directly onto one of the sheets.

7. A cover as claimed in claim 6 in which the permanent message is printed on the underneath sheet.

## Patentansprüche

1. Mitteilungsabdeckung, die eine dauerhafte Mitteilung und eine löschbare Mitteilung anzeigen kann und aus einem für Mitteilungen durchsichtigen Vorderblatt und einem eine löschbare Mitteilung aufnehmenden Unterblatt besteht, wobei das Vorderblatt eine Schutzabdeckung bildet, die verhindert, das die löschbare Mitteilung beim Durchlauf durch ein Faxgerät beeinträchtigt wird.

2. Abdeckung nach Anspruch 1, die drei Blätter umfaßt: ein hinteres Blatt und ein durchsichtiges Vorder- und Mittelblatt.

3. Abdeckung nach Anspruch 2, bei der das hintere Blatt durchsichtig oder undurchsichtig ist und mit den erforderlichen Einzelheiten bedruckt ist.

4. Abdeckung nach Anspruch 3, bei der das hintere Blatt undurchsichtig ist.

5. Abdeckung nach Anspruch 1 oder 2, bei der das hintere Blatt als Unterlage zur Aufnahme eines Firmenbriefkopfes dient, die zwischen dem hinteren Blatt und dem durchsichtigen Mittelblatt angeordnet wird, wobei das Mittelblatt dann als Oberfläche dient, auf der die löschbare Mitteilung unter Verwendung von im Handel erhältlichen Löschstiften geschrieben werden kann.

6. Abdeckung nach Anspruch 1, die zwei Blätter umfaßt, wobei das untere Blatt die löschbare Mitteilung aufnehmen kann und die dauerhafte Mitteilung direkt auf eines der Blätter gedruckt wird.

7. Abdeckung nach Anspruch 6, bei der die dauerhafte Mitteilung auf das untere Blatt gedruckt ist.

## Revendications

1. Page de garde de message capable de présenter un message permanent et un message effaçable qui comprend une feuille avant transparente aux messages et une feuille de dessous qui reçoit un message effaçable, la feuille avant servant de couverture de protection empêchant le message effaçable d'être affecté par le passage dans un télécopieur.

2. Page de garde selon la revendication 1, comprenant trois feuilles : une feuille arrière et des feuilles avant et intermédiaire transparentes.

3. Page de garde selon la revendication 2, dans laquelle la feuille arrière est une feuille transparente ou opaque et est imprimée avec l'inscription appropriée.

4. Page de garde selon la revendication 3, dans laquelle la feuille arrière est opaque.

5. Page de garde selon l'une ou l'autre des revendications 1 et 2, dans laquelle la feuille arrière sert de base pour recevoir un en-tête de société qui sera pris en sandwich entre la feuille arrière et la feuille intermédiaire transparente, la feuille intermédiaire servant alors de surface sur laquelle le message effaçable peut être écrit en utilisant des stylos à encre effaçable disponibles dans le commerce.

6. Page de garde selon la revendication 1, comprenant deux feuilles, la feuille du dessous étant capable de recevoir le message effaçable et le message permanent imprimé directement sur l'une des feuilles.

7. Page de garde selon la revendication 6, dans laquelle le message permanent est imprimé sur la feuille du dessous.
